# EUROPÄISCHE PATENTSCHRIFT

(11) **EP 2 030 920 B1**
(45) Veröffentlichungstag und Bekanntmachung des Hinweises auf die Patenterteilung: **13.10.2010**
(21) Anmeldenummer: 08014925.5
(22) Anmeldetag: 22.08.2008
(51) Int. Cl.: B65G 23/10

(54) **Bandförderer**
Belt conveyor
Convoyeur à bande

(30) Priorität: 03.09.2007 DE 102007041790
(43) Veröffentlichungstag der Anmeldung: 04.03.2009
(73) Patentinhaber: ContiTech Transportbandsysteme GmbH, 30165 Hannover (DE)
(72) Erfinder: Moeschen, Michael, 37176 Noerten-Hardenberg (DE); Mann, Hartmut, 02625 Bautzen (DE)
(74) Vertreter: Samson & Partner

(56) Entgegenhaltungen:
- DE-A1- 2 644 163
- DE-A1-102005 041 523
- FR-A- 2 663 309

## Beschreibung

### Gebiet der Erfindung

Die vorliegende Erfindung bezieht sich allgemein auf Bandförderer.

### Hintergrund der Erfindung

Es sind allgemein Bandförderer bekannt, die ein Förderband mit einem oberen vorlaufenden Abschnitt (Obertrum) und einem unteren rücklaufenden Abschnitt (Untertrum) aufweisen. Bei Bandförderern zum Transport von Schüttgütern wird das lasttragende Trum (i.a. das Obertrum) meist gemuldet. Bei Bandförderern zum Transport von Stückgut und/oder Personen bleibt das lasttragende Trum dagegen meist eben; manche Ausführungen haben hierzu einen sog. Gleittisch, auf dem das lasttragende Trum gleitet. Solche Fördervorrichtungen werden - wie gesagt - zum Stückgut- und/oder Personentransport eingesetzt. Ein spezieller Anwendungsfall ist beispielsweise ein Einsatz im Automobilbau als parallel zum eigentlichen Montageband laufendes "Werkermitfahrband".

Aus der Auslegeschrift DE 1 000 317 ist ein Bandförderer bekannt, bei dem das (beladene) Obertrum über eine Gleitfläche aus Blechschüssen geführt wird und das Untertrum knapp unterhalb der Blechschüsse auf einer weiteren Gleitfläche entlang läuft.

In der Druckschrift DE 10 2005 041 523 A1, nach der der Oberbegriff des Anspruchs 1 gebildet wurde, wird berichtet, dass es bei Bandförderern bekannt sei, einen Gleittisch, auf dem das Obertrum läuft, mit einer unteren Gleitfläche schwimmend auf dem Untertrum abzutragen. Das Untertrum wird wiederum gleitend zur Unterlage abgetragen, und zwar über einen feststehenden Gleittisch. Bei diesem Stand der Technik wird also die Gewichtskraft der Last flächig durch das rücklaufende Untertrum geleitet. Die DE 10 2005 041 523 A1 schlägt als Weiterbildung dieses Standes der Technik vor, zwischen Untertrum und Unterlage zusätzlich ein mitlaufendes Hilfsband vorzusehen.

Aus der DE 10 2004 002 738 A1 ist ein Bandförderer bekannt, dessen Obertrum über einen Gleittisch abgetragen wird, der sich auf einen z.B. auf dem Boden aufliegenden Tragrahmen abstützt. Das (unbelastete) Untertrum wird rollend von Tragrollen abgetragen.

Aufgabe der Erfindung ist es einen verbesserten, für Stückgut- und/oder Personenförderung geeigneten Bandförderer bereitzustellen.

### Kurzfassung der Erfindung

Die Erfindung betrifft einen Bandförderer, der folgendes umfasst: ein Förderband, das ein Obertrum und ein Untertrum bildet, einen Gleittisch, der zwischen Obertrum und Untertrum angeordnet ist, und eine Abtragevorrichtung, die unter dem Untertrum angeordnet ist. Das Gewicht einer auf dem Obertrum befindlichen Last wird auf den Gleittisch übertragen, und wird, zusammen mit dem Gewicht des Gleittisches, weiter durch das zwischengeschaltete Untertrum auf die Abtragevorrichtung übertragen. Die Abtragevorrichtung weist Tragrollen auf, welche das Untertrum rollend abtragen.

Fakultative Ausgestaltungen sind in den abhängigen Ansprüchen angegeben.

### Kurzbeschreibung der Zeichnungen

Ausführungsformen der Erfindung werden nun beispielhaft und unter Bezugnahme auf die Zeichnungen beschrieben, in denen:
Fig. 1 einen schematischen Längsschnitt eines Ausschnitts einer Fördervorrichtung gemäß dem in der DE 10 2004 002 738 A1 beschriebenen Stand der Technik zeigt;
Fig. 2 einen schematischen Längsschnitt eines Ausschnitts einer ersten Ausführungsform einer erfindungsgemäßen Fördervorrichtung zeigt;
Fig. 3 einen schematischen Längsschnitt eines Ausschnitts einer zweiten Ausführungsform einer erfindungsgemäßen Fördervorrichtung zeigt.

### Beschreibung von bevorzugten Ausführungsformen

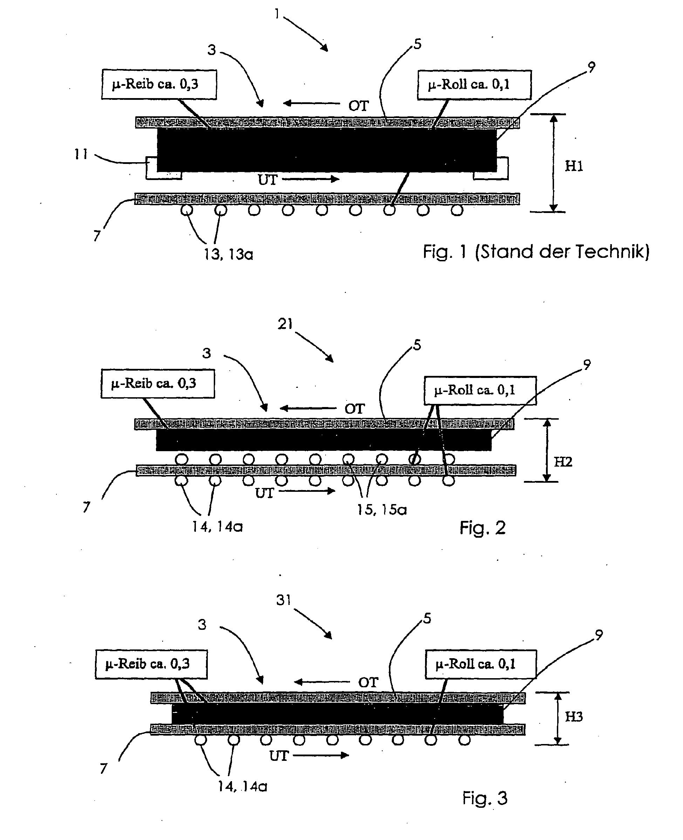

Die Fig. 2 und 3 veranschaulichen verschiedene Ausführungsformen. Vor einer detaillierten Beschreibung der Fig. 2 und 3 folgen zunächst einige allgemeinere Erläuterungen.

Die im folgenden beschriebenen Bandförderer weisen ein Förderband mit einem Obertrum und einem Untertrum auf. Mit Obertrum ist hier allgemein der oben liegende, in Förderrichtung laufende Abschnitt des Förderbands bezeichnet; bei den beschriebenen Ausführungsformen trägt das Obertrum die zu fördernde Last. Entsprechend ist das Untertrum der unten liegende, gegen die Förderrichtung laufende Abschnitt des Förderbands, herkömmlicherweise trägt es keine Last (bei den Ausführungsformen wird jedoch auch das Untertrum belastet, wie unten näher erläutert wird). Das Förderband ist bei einigen der Ausführungsformen ein Gurt, im wesentlichen aus Gummi, der zur Aufnahme von Zugkräften in Längsrichtung in seinem Inneren mit Längszugträgern, z.B. aus Stahl (z.B. Stahlseile) oder Textilmaterial (z.B. Aramidcorde) ausgerüstet sein kann. Außerdem ist der Gurt bei manchen Ausführungsformen mit Quereinlagen aus Stahl oder Textil ausgerüstet, auf seiner Laufseite ggf. Zur Reibungsverminderung auch mit einem Gleitgewebe. Da ein Gurt zur Förderung von Personen und/oder Stückgütern üblicherweise nicht gemuldet wird, kann der Gurt in Querrichtung steif ausgebildet sein, z.B. kann er oberhalb und unterhalb der ggf. vorhandenen Längszugträger mit je einer Quereinlage aus Stahl und/oder Textil ausgerüstet sein. Der Begriff "Förderband" ist aber nicht etwa auf solche Gurte beschränkt, vielmehr bezeichnet er auch Gliederbänder, Segmentbänder, Kettenbänder, Scharnierbänder etc., aus Gummi, sonstigen Kunststoffen und/oder Metall. Manche Ausführungsformen sind (zum Beispiel im Automobilbau einzusetzende) parallel zu einem Montageband laufende Werkermitfahrbänder zur Mitfahrt von Montagearbeitern neben dem Montageband, wobei ein solches Werkermitfahrband mit dem Montageband oder diesem entgegen laufen kann (möglich ist auch ein sog. Reversierbetrieb, bei dem das Werkermitfahrband abwechselnd mit dem und gegen das Montageband läuft, damit z.B. eine auf dem Werkermitfahrband befindliche Person immer wieder zurückgesetzt werden kann, um dann wieder ein Stück mit dem Montageband zu fahren). Bei manchen Ausführungsformen läuft das Förderband nur gerade, bei anderen Ausführungsformen liegen in seinem Verlauf auch (z.B. horizontale) Kurven (es folgt dann z.B. einem aus horizontalen Kurven und Geradenabschnitten zusammengesetzten Verlauf). Das Förderband läuft im wesentlichen horizontal, kann aber z.B. zur Überwindung von Höhenunterschieden auch stellenweise oder insgesamt geneigt angeordnet sein.

Das Obertrum liegt bei den Ausführungsformen direkt auf dem zwischen Obertrum und Untertrum angeordneten Gleittisch und gleitet auf diesem. Der Gleittisch nimmt das Gewicht der zu fördernden Last und daneben das Gewicht des aufliegenden Förderbands auf. Der Gleittisch ist bei manchen Ausführungsformen im Längsschnitt und im Querschnitt eben, bei anderen Ausführungsformen ist er nur im Längsschnitt eben, weist aber längs verlaufende Führungen (also z.B. Vertiefungen oder Erhöhungen im Querschnitt) auf, die das hierzu z.B. komplementär ausgebildete Förderband in Querrichtung formschlüssig führen. Im Hinblick auf ein Gleiten des Förderbands mit möglichst geringem Reibungskoeffizienten weist der Gleittisch bei manchen Ausführungsformen eine glatte Oberfläche, z.B. aus Stahl, Holz, Kunststoff etc. auf (wobei die geringe Reibung auch durch eine reibungsvermindernde Beschichtung des Gleittischs z.B. mit einem der genannten Materialien erzielt sein kann).

Unter dem Gleittisch läuft das Untertrum zurück. Unter dem Untertrum befindet sich eine Abtragevorrichtung, die das Untertrum des Gurts rollend abträgt (unter einer "Abtragevorrichtung" wird in der vorliegenden Patentsbeschreibung eine Einrichtung zur rollenden Abtragung verstanden). Diese Abtragevorrichtung wird im folgenden auch als "erste Abtragevorrichtung" bezeichnet. Die genannte erste Abtragevorrichtung ist aus Tragrollen aufgebaut, die unter dem Untertrum angeordnet sind und z.B. an einem Grundrahmen oder am Boden drehbar gelagert sind, mit im allgemeinen horizontaler und quer zur Förderrichtung orientierter Drehachse.

Bei den Ausführungsformen wird das Gewicht der auf dem Obertrum befindlichen Last (zusammen mit dem Gewicht des Gleittisches) durch das zwischengeschaltete Untertrum hindurch auf die erste Abtragevorrichtung übertragen. Der Gleittisch ist hierzu in Schwerkraftrichtung schwimmend auf dem Untertrum angeordnet und stützt sich in Schwerkraftrichtung auf das unter ihm hindurch bewegte Untertrum ab. Die erste Abtragevorrichtung dient also nicht - wie üblich - nur dazu, dass (Leer-)Gewicht des Untertrums aufzunehmen, sondern vielmehr auch das Gewicht einer auf dem Obertrum befindlichen Last, sowie das Gewicht des Obertrums und des Gleittisches. Die erste Abtragevorrichtung leitet diese Gewichtskräfte in den Grundrahmen bzw. Boden ein.

Somit wirkt in Förderrichtung zwischen dem lasttragenden Obertrum und dem Gleittisch eine Gleitreibungskraft; zwischen dem lastdurchleitenden Untertrum und der ersten Abtragevorrichtung wirkt hingegen nur eine Rollreibungskraft.

Der Gurt ist bei manchen Ausführungsformen auf seiner Tragseite mit einer (nicht gleitfähigen) Gummideckplatte ausgerüstet, und auf seiner Laufseite mit einem Gleitgewebe. Zur Reinigung der Tragseite ist im Bereich der Antriebs-Umlenkrolle eine Reinigungsvorrichtung vorgesehen, die Verunreinigungen von der Laufseite abstreift.

Im folgenden werden zwei Hauptausführungsformen beschrieben, die sich dadurch unterscheiden, wie die Kraft vom Gleittisch auf das unter diesem hindurch bewegte Untertrum abgetragen wird.

Bei der ersten dieser Hauptausführungsformen ist an der Unterseite des Gleittischs, zum Untertrum hin, eine zweite Abtragevorrichtung zur rollenden Abtragung der geförderten Last (und des Gewichts von Obertrum und Gleittisch) auf das Untertrum angeordnet. Bei diesen Ausführungsformen ist das Untertrum also zwischen der ersten und zweiten Abtragevorrichtung angeordnet und wird beidseitig rollend abgetragen, so dass am Untertrum nur Rollreibungskräfte (keine Gleitreibungskräfte) wirken.

Die zweite Abtragevorrichtung wird durch z.B. durch am Gleittisch in Förderrichtung drehbar gelagerte Tragrollen gebildet. Bei manchen Ausführungsbeispielen weist der Gleittisch Aussparungen auf, die die Tragrollen der zweiten Abtragevorrichtung teilweise aufnehmen, was der Verringerung der Bauhöhe des Gleittischs dient.

Bei manchen Ausführungsformen liegen sich die Tragrollen der ersten und der zweiten Abtragevorrichtung auf den beiden Seiten des Untertrums gegenüber (d.h. sie fluchten in einer Richtung senkrecht zur Förderbandebene gesehen), so dass das Untertrum durch die von der zweiten Abtragevorrichtung aufgelegte Gewichtskraft nur auf Druck, aber nicht auf Biegung beansprucht wird.

Bei anderen Ausführungsformen fluchten die Tragrollen der ersten und der zweiten Abtragevorrichtung auf den beiden Seiten des Untertrums nicht, oder nicht vollständig. Sie sind z.B. quer und/oder längs zur Förderrichtung versetzt zueinander angeordnet, so dass es hier zu einer gewissen Biegebeanspruchung des Gurts kommen kann.

Bei der zweiten Hauptausführungsform ist an der Unterseite des Gleittischs hingegen eine (weitere) Gleitfläche vorgesehen, und der Gleittisch liegt damit gleitend auf der Oberseite des unter ihm hindurch bewegten Untertrums (dies ist die Laufseite des Gurts) auf. Bei dieser Ausführungsform wirken an der Oberseite des Untertrums also hinsichtlich der vom Gleittisch aufgelegten Gewichtskraft Gleitreibungskräfte, während an dessen Unterseite (dies ist die Tragseite des Gurts) Rollreibungskräfte wirken.

Bei der ersten Hauptausführungsform sind die Gesamt-Reibungskräfte geringer als bei der zweiten, wohingegen die zweite Hauptausführungsform wegen des Entfalls der zweiten Abtragevorrichtung hinsichtlich der Bauhöhe noch günstiger ist.

Bei manchen Ausführungsformen erstrecken sich die Tragrollen der ersten und/oder der ggf. vorhandenen zweiten Abtragevorrichtung über die gesamte Breite des Untertrums. Bei anderen Ausführungsformen sind hingegen getrennte Tragrollen vorgesehen, die sich nicht über die gesamte Breite des Untertrums erstrecken. Beispielsweise lassen sie einen Mittelbereich des Untertrums frei; das Förderband ist dort somit ohne Unterstützung, was bei einem Gurt mit ausreichender Quersteifigkeit die Tragrollengestaltung vereinfacht.

Bei beiden Hauptausführungsformen kommt es durch die durch Rollen erfolgende Abtragung des Untertrums zu einer Walkbeanspruchung des Fördergurts. Dieser wird nämlich zwischen jeweils zwei Walzen bzw. zwischen jeweils einer Walze und einer Fläche zusammengepresst, d.h. doppelseitig linienartig beaufschlagt (eine solche doppelseitige linienartige Beaufschlagung liegt nicht etwa nur bei der ersten Hauptausführungsform mit beiderseitiger Abtragung des Untertrums durch Rollen vor, sondern auch bei der zweiten Hauptausführungsform, da die dort den nur einseitig angeordneten Rollen gegenüberliegende Fläche nur dort wirksam auf den Gurt drückt, wo ihr eine Rolle gegenüberliegt; an den anderen Orten fehlt der Gegendruck, so dass der Gurt dort gewissermaßen nach unten ausweicht).

Aus dem in der Druckschrift DE 10 2005 041 523 A1 beschriebenen und dort in Fig. 5 gezeigten Stand der Technik ist bereits der Grundgedanke bekannt, den Gleittisch mit Obertrum schwimmend auf das Untertrum aufzulegen und somit das Gewicht der zu fördernden Last durch das Untertrum zu leiten. Das Untertrum gleitet bei diesem Stand der Technik flächig auf einem (unteren) Gleittisch. Aufgrund der Abtragung des Untertrums durch Rollen unterscheidet sich die Erfindung hiervon in mehrfacher Hinsicht:
- die Tragfläche des Gurtes wird nicht gleitend beansprucht und daher nicht zerkratzt;
- die Tragfläche des Gurtes braucht daher nicht gleitfähig ausgebildet zu sein, z.B. kann sie eine Gummioberfläche (statt eine Gleitgewebeoberfläche) sein;
- anders als eine Gleitgewebeoberfläche kann eine solche Gummioberfläche leichter sauber gehalten werden, z.B. durch eine Abstreifvorrichtung;
- die Reibung ist geringer, da statt drei Gleitflächen - je nach Ausführungsform - nur noch zwei oder nur noch eine Gleitfläche vorhanden ist; folglich ist eine geringere Antriebsmotorleistung ausreichend, der Förderer kann länger sein und mehr Last fördern.

Mit der in der DE 10 2005 041 523 A1 vorgeschlagenen Lösung eines mitbewegten Hilfsgurts, welches statt dem Untertrum auf einer ebenen Gleitfläche als Unterlage gleitet, werden diese Ergebnisse zum Teil ebenfalls erzielt. Allerdings ist diese Hilfsgurt-Lösung relativ aufwendig. Erfindungsgemäß wird kein Hilfsgurt eingesetzt; dieser Aufwand entfällt also.

Obzwar eine rollende Abtragung eines nichtbelasteten Untertrums und auch eines belasteten Obertrums bei Bandförderern üblich ist (letzteres vor allem bei Schüttgutförderern), liegen bei der erfindungsgemäßen rollenden Abtragung des belasteten Untertrums andere Verhältnisse vor. Bei einem nichtbelasteten Untertrum gibt es mangels Last praktisch keine Walkbeanspruchung, und auch bei der rollenden Abtragung eines belasteten Obertrums erfährt der Gurt nur eine relativ geringe Walkbeanspruchung, weil er an den Rollen nach oben frei ausweichen kann. Bei der erfindungsgemäßen rollenden Abtragung des belasteten Untertrums wird der Gurt hingegen - wie oben bereits angesprochen wurde - doppelseitig linienartig beaufschlagt, und erfährt somit eine ungleich stärkere Walkbeanspruchung.

In einer (unbewussten) Abneigung des Fachmanns gegenüber einer doppelseitig linienartigen Beaufschlagung dürfte übrigens vermutlich der Grund liegen, warum bei dem in der DE 10 2005 041 523 A1 beschriebenen Stand der Technik das Untertrum flächig abgetragen wird, und warum - obwohl in der DE 10 2005 041 523 A1 verschiedenen Nachteile dieses Standes der Technik erkannt wurden - mit dem vorgeschlagenen Hilfsgurt letztlich eine flächige Abtragung beibehalten wurde.

Es hat sich jedoch gezeigt, dass herkömmliche Fördergurte für eine solche doppelseitige linienartige Beaufschlagung durchaus geeignet sind. Vorteilhafterweise achtet man durch geeignete konstruktive Ausgestaltung des Förderers darauf, das vom jeweiligen Gurttyp abhängige maximale Linienbeanspruchungen (z.B. 10N/mm) nicht überschritten werden, z.B. indem man den Abstand der Rollen voneinander ausreichend (und damit die Rollenlänge ausreichend groß) wählt.

Zurückkehrend zu Fig. 1 bis 3, sind dort verschiedene Bandförderer, z.B. Werkermitfahrbänder oder Stückgutförderer, jeweils im Längsschnitt gezeigt. Der in Fig. 1 mit "1" bezeichnete Bandförderer zeigt den Stand der Technik (DE 10 2004 002 738 A1), und die in den Fig. 2 und 3 mit "21" und "31" bezeichneten Bandförderer zeigen die erste bzw. zweite Hauptausführungsform. Die Bandförderer 1, 21, 31 weisen jeweils ein (im folgenden auch als "Gurt" bezeichnetes) Endlos-Förderband 3 auf, das mit seinem Obertrum 5 auf einem ebenen Gleittisch 9 verläuft und z.B. zur Beförderung von Personen und/oder Stückgut dient. Das Obertrum 5 gleitet reibend über den Gleittisch 9, der somit die zu fördernde Last aufnimmt. Unter dem Gleittisch 9 läuft das Förderband 3 zurück. In den Figuren läuft das Obertrum 5 nach links (mit "OT" bezeichneter Pfeil) und das Untertrum 7 in Fig. 1 nach rechts (mit "UT" bezeichneter Pfeil). Das Förderband 3 ist an den Enden des Bandförderers 1, 21, 31 jeweils um geeignete Umlenkrollen (diese liegen außerhalb des in den Figuren dargestellten Bereichs) geführt, und geht dabei vom Obertrum 5 zum Untertrum 7, bzw. vom Untertrum 7 zum Obertrum 5 über. Die Förderbewegung des Förderbandes 3 wird von einer geeigneten Antriebseinrichtung erzeugt, die wenigstens eine der Umlenkrollen antreibt.

Bei Fig. 1 (Stand der Technik gemäß DE 10 2004 002 738 A1) stützt sich der Gleittisch 9 auf ein Traggestell 11, das das Gewicht der zu fördernden Last, des Obertrums 5 und des Gleittischs 9 aufnimmt. Das Traggestell 11 stützt sich wiederum an einem Grundrahmen oder direkt auf dem Boden ab, wobei es das Untertrum 7 brückenartig umgreift. Es leitet somit die genannten Gewichtskräfte unter Umgehung des Untertrums 7 in den Grundrahmen bzw. den Boden ein. Entsprechend ist zwischen der Unterseite des Gleittischs 9 und der Oberseite des Untertrums 7 ein freier Raum, der einen Abstand zwischen diesen schafft.

Bei den Ausführungsformen gemäß den Fig. 2 und 3 stützt sich der Gleittisch 9 hingegen auf das unter ihm durchlaufende Untertrum 7 (also auf die hier nach oben weisende Laufseite des Gurts 3) ab. Er ist hierzu schwimmend auf dem Untertrum 7 angeordnet, stützt sich also in Richtung der Schwerkraft nicht an einem Traggestell o.ä. ab. Er kann sich also mit einem gewissen Spielraum Richtung senkrecht zur Ebene des Förderbands 3 (in Fig. 2 und 3 also nach oben und unten) bewegen. In der Ebene des Förderbands 3 ist der Gleittisch 9 hingegen in seiner Bewegungsmöglichkeit beschränkt, z.B. durch einen die Vertikalbewegung zulassenden, Horizontalbewegung aber nicht zulassenden Rahmen, der z.B. mit dem Grundrahmen oder dem Boden verbunden ist, um ein "Weglaufen" des schwimmenden Gleittischs 9 zu vermeiden.

Das Untertrum wird an seiner Unterseite (also an der hier nach unten weisenden Tragseite des Gurts 3) rollend über eine (erste) Abtragevorrichtung mit Tragrollen abgetragen. Bei Fig.1 (Stand der Technik gemäß DE 10 2004 002 738 A1) dienen Tragrollen am Untertrum nur dazu, das relativ geringe Eigengewicht des Untertrums 7 aufzunehmen, bei den Fig. 2 und 3 nehmen die Tragrollen jedoch auch das Gewicht der zu fördernden Last, des Obertrums 5 und des Gleittischs 9 auf, und sind hierfür entsprechend dimensioniert und gelagert. Aufgrund dieser unterschiedlichen Funktion sind Abtragevorrichtung und Tragrollen in Fig. 1 mit "13" bzw. "13a", in den Fig. 2 und 3 jedoch mit "14" bzw. "14a"bezeichnet. Bei dem bekannt gewordenen Stand der Technik, bei dem das Gewicht der zu fördernden Last ebenfalls durch das Untertrum geleitet wird (z.B. in der DE 10 2005 041 523 A1), ist hingegen stets nur eine gleitende Abtragung des Untertrums vorgeschlagen worden, wie bereits oben im Zusammenhang mit der mit einer Rollenabtragung einhergehenden Walkbeanspruchung ausgeführt wurde. Die Tragrollen 14a erstrecken sich bei manchen Ausführungsformen über die gesamte Breite des Gurts 3 quer zur Förderrichtung (bei anderen Ausführungsformen erstrecken sie sich hingegen nur über einen mittleren Bereich des Gurts, oder sie unterstützen als "gespaltene" Rollen das Förderband nur seitlich)

Bei der ersten Hauptausführungsform gemäß Fig. 2 weist der Gleittisch 9 zwecks rollender Auflage auf der Oberseite des Untertrums 7 (also an der Laufseite des Gurts 3) an der Gleittisch-Unterseite eine zweite Abtragevorrichtung 15 mit drehbar im Gleittisch 9 gelagerten Tragrollen 15a auf. Die Tragrollen 15a erstrecken sich bei manchen Ausführungsformen über die gesamte Breite des Gurts 3 quer zur Förderrichtung (bei anderen Ausführungsformen erstrecken sie sich hingegen nur über einen mittleren Bereich des Gurts, oder sie unterstützen als "gespaltene" Rollen das Förderband nur seitlich). Sie sind zur Aufnahme der Gewichtskraft der Förderlast (und des Obertrums 5 und des Gleittischs 9) ausreichend dimensioniert.

Wie in Fig. 2 dargestellt ist, fluchten die Tragrollen 15a - in Förderrichtung gesehen - mit den darunter liegenden Tragrollen 14a, so dass das Förderband 3 bei der Durchleitung der genannten Gewichtskräfte nur auf Druck, nicht aber auf Biegung beansprucht wird. Bei manchen Ausführungsformen weist der Gleittisch 9 im übrigen unten Aussparungen auf, die die Tragrollen 15a teilweise aufnehmen.

Im Stand der Technik gemäß Fig. 1 ist der Gleittisch 9 nur in relativ großen Längsabständen am Traggestell 1 abgestützt; er fungiert also auch als Längsträger. Da bei der Ausführungsform gemäß Fig. 2 die Längsbeabstandung der Tragrollen 14a, 15a i.a. kleiner gewählt werden kann als beim Stand der Technik gemäß Fig. 1 die Tragweite des Gleittischs 9, kann der Gleittisch 9 gemäß Fig. 2 (und gemäß Fig. 3) wegen der dort nahezu kontinuierlichen Abstützung hinsichtlich seines Tragvermögens schwächer (d.h. niedriger) dimensioniert werden. Zudem erlauben es die von oben auf das Untertrum 7 drückenden Rollen 15 den bei Fig. 1 zwischen Gleittisch 9 und Untertrum 7 vorgesehenen Abstand zu verringern.. Insgesamt erlaubt dies eine Verringerung der Bauhöhe H2 gegenüber der Bauhöhe H1 beim Stand der Technik gemäß Fig. 1.

Fig. 3 zeigt die zweite Hauptausführungsform, bei dem im Unterschied zu Fig. 2 zwischen dem Gleittisch 9 und einem Untertrum 7 keine Tragrollen angeordnet sind, sondern der Gleittisch 9 mit seiner Unterseite direkt gleitend auf der Oberseite des Untertrum 7 (also der Laufseite des Gurts 3) aufliegt. Gegenüber Fig. 2 erlaubt dies eine weitere Verringerung der in Fig. 3 mit "H3" bezeichneten Bauhöhe.

Üblicherweise ist Rollreibung geringer als Gleitreibung. Der Reibbeiwert von Tragrollen kann beispielsweise mit µ ∼ 0,1 und für die Gleitreibung zwischen Gurt und Gleitfläche mit µ ∼ 0,3 angenommen werden.

Der Durchmesser der Tragrollen 14a, 15a oberhalb und unterhalb des Untertrums (bei der ersten Hauptausführungsform) bzw. 14a unterhalb des Untertrums (bei der zweiten Hauptausführungsform) ist bei manchen Ausführungsformen möglichst klein gewählt; er beträgt z.B. weniger als das 6-fache, vorzugsweise weniger als des 4-fache, und besonders vorzugsweise weniger als das 3-fache der Gurtdicke.

Beim Stand der Technik gemäß Fig. 1 ist im wesentlichen nur die Gleitreibung zwischen Obertrum 5 und Gleittisch 9 mit µ ∼ 0,3 anzunehmen (die Rollen 13 tragen bis auf das Eigengewicht des Untertrums 7 keine Last, so dass dort die Reibung vernachlässigbar ist).

Bei der Ausführungsform gemäß Fig. 2 kommt zu dieser Gleitreibung am Obertrum 5 zweifach die Rollreibung (mit µ ∼ 0,1) hinzu, und zwar zwischen Gleittisch 9 und Untertrum 7 sowie zwischen Untertrum 7 und dem Unterbau. Entsprechend größer ist die erforderliche Antriebsleistung. Dies ist gewissermaßen der für die Verringerung der Bauhöhe zu zahlende Preis. Bei der Ausführungsform gemäß Fig. 3 liegt zweimal Gleitreibung (mit µ ∼ 0,3), nämlich zwischen Obertrum 5 und Gleittisch 9 sowie zwischen Gleittisch 9 und Untertrum 7 vor, und einmal Rollreibung (mit µ ∼ 0,1) zwischen Untertrum 7 und dem Unterbau.

Entsprechend noch größer ist die erforderliche Antriebsleistung, für eine weitere Verringerung der Bauhöhe. Bei manchen Bandförderern für Stückgut- oder Personentransport sind Reibungserhöhungen in gewissen Grenzen jedoch akzeptabel, da die Förderlasten und Förderlängen manchmal derart sind, dass sie dies zulassen.

Da der Gurt 3 auf seiner Laufseite gleitbegünstigend ausgebildet ist (z.B. mit einem Gleitgewebe ausgerüstet ist), da er im Obertrum 5 oben auf dem Gleittisch 9 gleitet, hält sich bei der zweiten Hauptausführungsform die zusätzliche Gleitreibung zuwischen der Unterseite des Gleittischs 9 und dem Untertrum 7 in Grenzen. Bei beiden Hauptausführungsformen tritt jedoch an der Tragseite des Gurts 3 keine Gleitreibung, sondern nur Rollreibung auf, so dass der Gurt 3 an der Tragseite nicht gleitfähig ausgebildet zu sein braucht (sondern dort z.B. eine nicht gleitfähige glatte Gummideckplatte aufweist).

Insgesamt stellt die Erfindung somit einen Bandförderer (z.B. ein Werkermitfahrband) mit geringer Bauhöhe bereit, der einfach aufgebaut ist, geringen Verschleiß zeigt, dessen Gurt leicht sauber gehalten werden kann, und der wenig Reibung aufweist.

## Patentansprüche

1. Bandförderer, umfassend
- ein Förderband (3), das ein Obertrum (5) und ein Untertrum (7) bildet,
- einen Gleittisch (9), der zwischen Obertrum (5) und Untertrum (7) angeordnet ist, und
- eine Abtragevorrichtung (14), die unter dem Untertrum (7) angeordnet ist wobei das Gewicht einer auf dem Obertrum (5) befindlichen Last auf den Gleittisch (9) übertragen wird und weiter zusammen mit dem Gewicht des Gleittisches (9) durch das zwischengeschaltete Untertrum (7) auf die Abtragevorrichtung (14) übertragen wird,
**dadurch gekennzeichnet, dass**
die Abtragevorrichtung (14) Tragrollen (14a) aufweist, welche das Untertrum (7) rollend abtragen.

2. Bandförderer nach Anspruch 1, bei welchem zwischen dem Gleittisch (9) und dem Untertrum (7) eine zweite Abtragevorrichtung (15) angeordnet ist, die zwischen dem Gleittisch (9) und dem Untertrum (7) rollend abträgt.

3. Bandförderer nach Anspruch 2, bei welchem die zweite Abtragevorrichtung (15) Tragrollen (15a) aufweist, die am Gleittisch gelagert sind.

4. Bandförderer nach Anspruch 3, bei welchem der Gleittisch (9) Aussparungen aufweist, und die Tragrollen (15a) teilweise in den Aussparungen angeordnet sind.

5. Bandförderer nach einem der Ansprüche 2 bis 4, bei welchem sich Tragrollen (14a, 15a) der ersten und der zweiten Abtragevorrichtung (14, 15) auf den beiden Seiten des Untertrums (7) gegenüberliegen, so dass das Untertrum (7) durch die von der zweiten Abtrageinrichtung (14) aufgelegte Gewichtskraft nicht auf Biegung beansprucht wird.

6. Bandförderer nach Anspruch 1, bei welchem der Gleittisch (9) gleitend auf dem Untertrum (7) liegt.

## Claims

1. Belt conveyor, comprising
- a conveyor belt (3) which forms an upper run (5) and a lower run (7),
- a sliding table (9) which is arranged between the upper run (5) and the lower run (7), and
- a carrying device (14) which is arranged below the lower run (7),
wherein the weight of a load located on the upper run (5) is transferred to the sliding table (9) and is further transferred, together with the weight of the sliding table (9), to the carrying device (14) through the lower run (7) arranged therebetween,
**characterised in that**
the carrying device (14) has carrying rollers (14a) which carry the lower run (7) along in a rolling manner.

2. Belt conveyor according to claim 1, in which there is arranged between the sliding table (9) and the lower run (7) a second carrying device (15) which carries along in a rolling manner between the sliding table (9) and the lower run (7).

3. Belt conveyor according to claim 2, in which the second carrying device (15) has carrying rollers (15a) which are mounted on the sliding table.

4. Belt conveyor according to claim 3, in which the sliding table (9) has cutouts and the carrying rollers (15a) are arranged partially in the cutouts.

5. Belt conveyor according to one of claims 2 to 4, in which carrying rollers (14a, 15a) of the first and second carrying device (14, 15) are located opposite one another on both sides of the lower run (7), so that the lower run (7) is not subjected to bending stress by the weight force applied by the second carrying device (14).

6. Belt conveyor according to claim 1, in which the sliding table (9) rests in a sliding manner on the lower run (7).

## Revendications

1. Convoyeur à bande, comportant
■ une bande transporteuse (3), qui forme un brin supérieur (5) et un brin inférieur (7),
■ une table de glissement (9) qui est montée entre le brin supérieur (5) et le brin inférieur (7), et
■ un dispositif de support (14), qui est monté en dessous du brin inférieur (7),
■ le poids d'une charge disposée sur le brin supérieur (5) étant transmis à la table de glissement (9) et en outre, conjointement avec le poids de la table de glissement (9), au dispositif de support (14) par l'intermédiaire du brin inférieur (7) intercalé,
**caractérisé en ce que** le dispositif de support (14) comporte des rouleaux de support (14a) qui supportent par rotation le brin inférieur (7).

2. Convoyeur à bande selon la revendication 1, dans lequel, entre la table de glissement (9) et le brin inférieur (7), est disposé un deuxième dispositif de support (15) qui supporte par rotation entre la table de glissement (9) et le brin inférieur (7).

3. Convoyeur à bande selon la revendication 2, dans lequel le deuxième dispositif de support (15) comporte des rouleaux de support (15a) qui sont montés contre la table de glissement.

4. Convoyeur à bande selon la revendication 3, dans lequel la table de glissement (9) comporte des évidements, et les rouleaux de support (15a) sont disposés en partie dans lesdits évidements.

5. Convoyeur à bande selon l'une quelconque des revendications 2 à 4, dans lequel des rouleaux de support (14a, 15a) du premier et du deuxième dispositif de support (14, 15) sont situés face à face sur les deux côtés du brin support (7), de telle sorte que le brin inférieur (7) n'est pas sollicité en flexion par le poids appliqué par le deuxième dispositif de support (14).

6. Convoyeur à bande selon la revendication 1, dans lequel la table de glissement (9) est en appui par glissement sur le brin inférieur (7).
